# EUROPEAN PATENT APPLICATION

(11) **EP 4 570 874 A1**
(43) Date of publication of application: **18.06.2025**
(21) Application number: 23852556.2
(22) Date of filing: 08.08.2023
(51) Int. Cl.: C09D 129/04, C09D 5/20, C09D 125/18

(54) **METHOD FOR REMOVING POLLUTANTS**

(30) Priority: 12.08.2022 JP 2022129114
(71) Applicant: Kao Corporation, Tokyo 103-8210 (JP)
(72) Inventor: USHIO, Noriaki, Tokyo 131-8501 (JP); JOCHI, Yuto, Tokyo 131-8501 (JP); KURIHARA, Kohei, Tokyo 131-8501 (JP)
(74) Representative: Hoffmann Eitle
(86) International application number: PCT/JP2023/028873
(87) International publication number: WO 2024/034594

(57) **Abstract**

A method of removing pollutants attached on a surface of interest, the method comprising the steps of: forming a coating film by applying a self-peeling film forming composition to a surface of interest on which pollutants are attached, the self-peeling film forming composition containing the following components (A) to (C), wherein a mass ratio of the component (B) to a total of the component (A) and the component (B), (B)/[(A)+(B)], is 0.6 or more and 0.95 or less; drying the coating film; and removing the pollutants together with the coating film by self-peeling of the coating film due to the drying: (A) a polymer containing vinyl alcohol as a constituent unit; (B) polystyrene sulfonic acid or a salt thereof having a sulfonation ratio of 89% or more; and (C) a volatile solvent.

## Description

### Field of the Invention

The present invention relates to a method of removing pollutants using a self-peeling film which is spontaneously peeled off as the film coated is dried after application to a surface of interest.

### Background of the Invention

In general, washing with water or a solvent, wiping, chipping by mechanical power, suction or the like is performed as a method for removing contaminants and powder dust such as fine particles which are attached and remaining on an equipment surface. However, in these operations, workers may inhale a washing liquid or scattered powder dust. In particular, if a washing liquid used is a substance hazardous to human bodies, or substances to be removed are pollutants containing asbestos, hazardous chemical substances, radioactive materials or the like, a means for preventing workers from inhaling the washing liquid and pollutants is required. For example, pollutants in nuclear power plants contain radioactive materials, and therefore have a risk that workers in washing or decommissioning operations are exposed through inhalation and attachment. Thus, a technique for removing such pollutants with high efficiency and safety is required.

Pollutants are characterized by being likely to remain on an equipment surface, particularly on fine portions such as irregularity portions. As an effective technique for removing such pollutants without scattering the pollutants, there is a method using a peelable coating film, in which a coating material is applied to a surface of interest, and dried, and the coating film is then peeled to remove the coating film together with adsorbed pollutants. This technique is effective for removing pollutants remaining in fine portions, but it is difficult to make a starting point of peeling at an end of the coating film at the time of peeling after drying, and if this takes much operation time, there is an increased risk of inhalation of hazardous substances by workers or exposure of workers to hazardous substances. There is also a problem that even collection of a peeled film is difficult in environments which cannot be accessed by persons.

It is considered that if as a means capable of coping with these problems, a self-peeling film can be developed in which a coating film after drying is spontaneously peeled off, collection operations can be easily carried out in a short time, and remote control by a robot or the like may be also possible.

As a technique related to a self-peeling film, Patent Literature 1 discloses a self-peelable penetrant inspection developer removing material obtained by dissolving a cellulose-based synthetic resin having strippable resin film-forming ability in a volatile organic solvent. Patent Literature 2 discloses a means in which a film containing an aqueous coating material as a main component and a water-soluble thickener is swollen with water to peel the film. On the other hand, as a technique different from a self-peeling film, Patent Literature 3 discloses a method in which a barrier coating is formed by applying a covering composition to a base material in advance, and the barrier coating and pollutants are removed from the base material after the pollutants are deposited on the barrier coating.

[Patent Literature 1]
   JP-A-59-171841
[Patent Literature 2]
   JP-A-2000-327958
[Patent Literature 3]
   JP-A-2010-530806

### Summary of the Invention

The present invention provides a method of removing pollutants attached on a surface of interest, the method comprising the steps of:
forming a coating film by applying a self-peeling film forming composition to a surface of interest on which pollutants are attached, the self-peeling film forming composition containing the following components (A) to (C), wherein a mass ratio of the component (B) to a total of the component (A) and the component (B), (B)/[(A)+(B)], is 0.6 or more and 0.95 or less; drying the coating film; and removing the pollutants together with the coating film by self-peeling of the coating film due to the drying:
(A) a polymer containing vinyl alcohol as a constituent unit;
(B) polystyrene sulfonic acid or a salt thereof having a sulfonation ratio of 89% or more; and
(C) a volatile solvent.

Further, the present invention provides use of a self-peeling film forming composition for removing pollutants on a surface of interest by self-peeling due to drying of a coating film, the self-peeling film forming composition comprising the following components (A) to (C), wherein a mass ratio of the component (B) to a total of the component (A) and the component (B), (B)/[(A)+(B)], is 0.6 or more and 0.95 or less:
(A) a polymer containing vinyl alcohol as a constituent unit;
(B) polystyrene sulfonic acid or a salt thereof having a sulfonation ratio of 89% or more; and
(C) a volatile solvent.

Further, the present invention provides a self-peeling film forming composition comprising the following components (A) to (C), wherein a mass ratio of the component (B) to a total of the component (A) and the component (B), (B)/[(A)+(B)], is 0.6 or more and 0.95 or less:
(A) a polymer containing vinyl alcohol as a constituent unit;
(B) polystyrene sulfonic acid or a salt thereof having a sulfonation ratio of 89% or more; and
(C) a volatile solvent.

### Detailed Description of the Invention

The technique disclosed in Patent Literature 1 has a problem that an offensive odor is given off because a considerable amount of an organic solvent is contained, and the self-peeling property is not sufficient. In the method disclosed in Patent Literature 2, it is necessary to swell the film by adding water thereto. Further, in the method disclosed in Patent Literature 3, a barrier coating and pollutants are removed by washing, wiping and the like, and thus the coating film removal method is not convenient.

Accordingly, the present invention relates to a method of removing pollutants, which ensures that removal of pollutants and operations of peeling and collecting a coating film to which the pollutants are adsorbed can be easily carried out in a short time by using a self-peeling film forming composition which is applied to a surface of interest, and then spontaneously peeled off just as the film coated is dried.

The present inventors found that a volatile solvent, in which a polymer containing vinyl alcohol as a constituent unit and polystyrene sulfonic acid or a salt thereof are contained at a specific ratio, enables removing pollutants while solving the above-described requirements, leading to completion of the present invention.

The method of removing pollutants according to the present invention ensures that removal of pollutants and operations of peeling and collecting a coating film to which the pollutants are adsorbed can be easily carried out in a short time by using a self-peeling film forming composition which is applied to a surface of interest, and then allows the coating film to peel at the periphery thereof in the process of drying of the coating film.

In the present invention, the term "self-peeling" means that due to evaporation of a volatile solvent after application of a self-peeling film forming composition to a surface of interest, a coating film peels little by little at a peripheral edge portion thereof under internal stress of the coating film component without application of a peel force. More specifically, the peel level of a dry coating film which is measured by the following evaluation method is preferably 20% or more and 100% or less. The peel level is preferably 30% or more and 100% or less, furthermore preferably 40% or more and 100% or less, furthermore preferably 50% or more and 100% or less, furthermore preferably 60% or more and 100% or less, furthermore preferably 70 % or more and 100% or less.

<Evaluation method> the composition is applied to an epoxy resin-coated substrate plate at 0.3 g/cm², and dried for 24 hours; and an area of adhesion between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

Examples of the component (A) which is a polymer containing vinyl alcohol as a constituent unit include polyvinyl alcohol, modified polyvinyl alcohol such as anion-modified or cation-modified polyvinyl alcohol, and vinyl acetate-ethylene copolymers and hydrolysates thereof. Among them, polyvinyl alcohol and hydrolysates of vinyl acetate-ethylene copolymers are preferable from the viewpoint of forming an appropriate coating film by intermolecular hydrogen bonding interaction with the component (B), and exhibiting an enhanced self-peeling property.

The glass transition point of the component (A) polymer is preferably 0°C or higher, more preferably 10°C or higher, further more preferably 20°C or higher, further more preferably 30°C or higher, from the viewpoint of exhibiting a self-peeling property by internal stress during drying. From the viewpoint of improving film strength, the glass transition point of the component (A) polymer is preferably 120°C or lower, more preferably 110°C or lower, further more preferably 100 °C or lower, further more preferably 90°C. If the glass transition point is lower than 0°C, the self-peeling property is not exhibited.

Further, the weight average molecular weight of the component (A) is preferably 5 000 or more, more preferably 10 000 or more, further more preferably 20 000 or more, further more preferably 40 000 or more, from the viewpoint of improving formation of a coating film and the self-peeling property of the dry coating film. The weight average molecular weight of the component (A) is preferably 10 000 000 or less, more preferably 1 000 000 or less, further more preferably 500 000 or less, further more preferably 200 000 or less, from the viewpoint of improving application properties.

As marketed products for the polyvinyl alcohol, Kuraray Poval Nos. 3-98, 5-98, 28-98, 60-98, 27-95, 27-96, 17-94, 7-92, 3-88, 5-88, 22-88, 44-88, 95-88 and 48-80 (manufactured by KURARAY **CO.,** LTD.) and the like can be used.

As marketed products for the vinyl acetate-ethylene copolymer, Exceval Nos. RS-2117 and RS-1717 (manufactured by KURARAY CO., LTD.) and the like can be used.

The content of the component (A) in the self-peeling film forming composition of the present invention is preferably 0.1 mass% or more, more preferably 0.5 mass% or more, further more preferably 1 mass% or more, further more preferably 1.5 mass% or more, from the viewpoint of sufficiently exhibiting the self-peeling property of a dry coating film, and preferably 20 mass% or less, more preferably 15 mass% or less, further more preferably 10 mass% or less, further more preferably 7 mass% or less, further more preferably 5 mass% or less, from the viewpoint of improving application properties. The content of the component (A) may be preferably from 1.5 to 20 mass%, more preferably from 1.5 to 15 mass%, further more preferably from 1.5 to 10 mass%, further more preferably from 1.5 to 7 mass%, even more preferably from 1.5 to 5 mass%, in the self-peeling film forming composition.

The sulfonation ratio of the component (B) which is polystyrene sulfonic acid or a salt thereof is 89% or more, and is preferably 95% or more, more preferably 98% or more, further more preferably 99% or more, from the viewpoint of sufficiently exhibiting the self-peeling property by use in combination with the component (A).

It is known from literature that in polystyrene sulfonic acid or a salt thereof, the glass transition point becomes higher as the sulfonation ratio increases (BALDING, Paul, et al. Physical Properties of Sodium Poly (styrene sulfonate): Comparison to Incompletely Sulfonated Polystyrene. Macromolecules, 2022, 55.5: 1747-1762). For example, it is said that Tg is about 210°C when the sulfonation ratio is 89%, and Tg exceeds the decomposition temperature (440°C) when the sulfonation ratio is close to 100%.

The glass transition point of the component (B) is preferably 210°C or higher, more preferably 300°C or higher, further more preferably 400°C or higher, further more preferably 440°C or higher, from the viewpoint of sufficiently exhibiting the self-peeling property by internal stress during drying.

The weight average molecular weight of the component (B) is preferably 5 000 or more, more preferably 10 000 or more, further more preferably 50 000 or more, further more preferably 100 000 or more, from the viewpoint of formation of a coating film and self-peeling of a dry coating film, and preferably 10 000 000 or less, more preferably 5 000 000 or less, further more preferably 2 000 000 or less, from the viewpoint of improving application properties.

As marketed products for the polystyrene sulfonic acid or a salt thereof, PS-100, PS-50 and PS-5 (each manufactured by Tosoh Finechem Corporation), and the like can be used.

The content of the component (B) in the self-peeling film forming composition of the present invention is preferably 5 mass% or more, more preferably 7 mass% or more, further more preferably 8 mass% or more, more preferably 10 mass% or more, from the viewpoint of sufficiently exhibiting the self-peeling property of a dry coating film, and preferably 50 mass% or less, more preferably 40 mass% or less, further more preferably 30 mass% or less, further more preferably 25 mass% or less, from the viewpoint of improving application properties. That is, the content of the component (B) is preferably from 5 to 50 mass%, more preferably from 7 to 40 mass%, further more preferably from 8 to 30 mass%, further more preferably from 10 to 25 mass%, in the self-peeling film forming composition.

The mass ratio of the component (B) to the total of the component (A) and the component (B), (B)/[(A)+(B)] is 0.6 or more, preferably 0.65 or more, more preferably 0.70 or more, further more preferably 0.75 or more, further more preferably 0.80 or more, and 0.95 or less, preferably 0.94 or less, more preferably 0.93 or less, from the viewpoint of sufficiently exhibiting the self-peeling property of a dry coating film and the viewpoint of the strength of a dry coating film. The mass ratio (B)/[(A)+(B)] may be preferably from 0.70 to 0.94, more preferably from 0.75 to 0.94, further more preferably from 0.75 to 0.93, even more preferably from 0.80 to 0.93.

A volatile solvent as a component (C) is a substance having volatility in a liquid state, is selected from the group consisting of water and a volatile organic solvent, and preferably contains water, and more preferably contains water as a main component. It is also possible to use a volatile organic solvent in combination with water from the viewpoint of suitably forming a dry coating film by performing drying after application. Examples of the volatile organic solvent include alcohols such as ethanol, methanol and propanol, ketones such as acetone, and tetrahydrofuran, and one or more selected from the group consisting of alcohols and ketones are preferable. The vapor pressure of the volatile organic solvent at 20°C is preferably 0.01 kPa or more and 106.66 kPa or less, more preferably 0.13 kPa or more and 66.66 kPa or less, further more preferably 0.67 kPa or more and 40.00 kPa or less, even more preferably 1.33 kPa or more and 40.00 kPa or less. When the component (C) contains a volatile organic solvent, the proportion thereof is preferably 50 mass% or less, furthermore preferably 20 mass% or less, furthermore preferably 10 mass% or less of the total component (C).

The content of the component (C) in the self-peeling film forming composition of the present invention is preferably 50 mass% or more, more preferably 60 mass% or more, further more preferably 70 mass% or more, from the viewpoint of improving application properties to a surface of interest, and preferably 95 mass% or less, more preferably 90 mass% or less, further more preferably 85 mass% or less, from the viewpoint of enhancing the self-peeling property.

The self-peeling film forming composition of the present invention may further contain potassium iodide as a component (D). If the pollutant is a substance that reacts with iodine, such as a radioactive substance such as cesium-134, cesium-137, strontium-90 or cobalt-60, the coating film is colored, which is an indication for cleaning. The effect of removal can be confirmed by repeating application and peeling until coloring does not occur.

The content of the component (D) in the self-peeling film forming composition of the present invention is preferably 1 mass% or more, more preferably 2 mass% or more, further more preferably 3 mass% or more, from the viewpoint of allowing iodide-derived coloring to occur, and preferably 15 mass% or less, more preferably 12 mass% or less, further more preferably 10 mass% or less, from the viewpoint of blending properties in the self-peeling film forming composition.

### [Optional components]

The self-peeling film forming composition of the present invention may further contain components such as a surfactant, a thickener, a plasticizer and a preservative as long as the self-peeling property of the dry coating film is not impaired.

As the surfactant, any of an anionic surfactant, a cationic surfactant, a nonionic surfactant and an ampholytic surfactant can be used.

The thickener is a component other than the component (A) in the present invention, and for example, an organic thickener such as xanthan gum, gellan gum, locust bean gum or guar gum, or an inorganic thickener such as bentonite, magnesium aluminum silicate, laponite, hectorite or silicic anhydride, or the like may be used at such a low concentration that the thickener alone does not form a film. Examples of the plasticizer include propylene glycol, 1,3-butylene glycol, glycerin, isopentylene glycol, hexylene glycol, dipropylene glycol, polyethylene glycol, and polypropylene glycol. Examples of the preservative include phenoxy ethanol, benzoic acid, benzisothiazolinone, sorbic acid, and propionic acid.

### [Method of removing pollutants]

The method of removing pollutants according to the present invention includes the steps of: forming a coating film by applying a self-peeling film forming composition to a surface of interest on which pollutants are attached, the self-peeling film forming composition containing components (A) to (C), wherein a mass ratio of the component (B) to the component (A), (B)/[(A)+(B)], is 0.6 or more and 0.95 or less; drying the coating film; and removing the pollutants together with the coating film by self-peeling of the coating film due to the drying.

In the present invention, the self-peeling film forming composition of the present invention is applied to a surface of interest on which pollutants are attached, the attached materials on the surface of interest, and the pollutants are adsorbed to the dry coating film in the process of drying of the composition. Consequently, the dry coating film to which the pollutants are adsorbed is spontaneously peeled off from the surface of interest due to the drying. Here, the coating film of the self-peeling film forming composition of the present invention is gradually peeled from a peripheral portion of the coating film due to the drying. Thereafter, the peeled dry coating film can be collected to remove pollutants on the surface of interest.

Examples of the surface of interest of removing pollutants include surfaces of synthetic resins (epoxy resin, vinyl chloride, acrylic resin, polyethylene and the like), synthetic resin-coated surfaces, metal surfaces, glass surfaces, ceramic surfaces, concrete surfaces, mortar surfaces, cement solidified product surfaces, and asphalt surfaces, and the surface may be smooth, or may have fine irregularities. Fine irregularities can be adapted so as not to inhibit self-peeling of a cement surface or the like. The surface of interest may be installed on any of floor surfaces, wall surfaces and ceilings of various facilities such as electric power plants, factories, warehouses, office buildings, condominiums, parking areas, roads, bridges and tunnels, and inclined spots such as slopes.

As pollutants removed, powdered or particulate deposits (for example, powder dust of asbestos, dirt, sand, sludge, slime, soot and the like), oily deposits (for example, oily contaminants such as crude oil and tar, and painted coating materials from oil-based pens, lacquer sprays and the like), deposits derived from animals and plants (moss, algae, bird's droppings, dead bugs and the like), and salts can be covered. The technique of the present invention can also be used for removal of pollutants in nuclear power plants and asbestos and other hazardous substances, and operations under severe conditions.

For application to a surface of interest, a spatula, a ground rake, a rake, a brush, a roller, a spray, a sprayer or the like can be used. The method of application includes spraying using the tool, or application by spraying or the like. The amount of application of the self-peeling film forming composition of the present invention to the surface of interest is preferably 0.1 kg/m² or more, more preferably 0.5 kg/m² or more, further more preferably 1 kg/m² or more, from the viewpoint of enhancing the self-peeling property of the dry coating film, and preferably 10 kg/m² or less, more preferably 8 kg/m² or less, further more preferably 5 kg/m² or less, even more preferably 3 kg/m² or less, from the viewpoint of ease of curing and film formation.

The step of drying the coating film after applying the composition to a surface of interest may be carried out by natural drying or air drying, and it is also possible to use a heat source such as a halogen heater. The environmental temperature in the drying step is preferably -10°C or higher, more preferably 0°C or higher, further more preferably 5°C or higher, and preferably 60°C or lower, more preferably 55°C or lower, further more preferably 50°C or lower.

In the method of removing pollutants according to the present invention, it is preferable that steps until self-peeling is started do not include a step of spreading or applying an aqueous composition containing water, or water other than that of the self-peeling film forming composition of the present invention at 50 mass% or more, from the viewpoint of avoiding inhibition of self-peeling. Further, it is more preferable that subsequent to the step of applying the self-peeling film forming composition of the present invention, the step of drying the coating film be carried out without other steps therebetween.

After the self-peeling film forming composition of the present invention is applied to a surface of interest, the coating film starts to shrink as a volatile solvent (water) as the component (C) is evaporated, but as long as the water content is high, the molecular chain of a film-forming component as the component (A) can move freely, so that internal stress is not generated. When drying proceeds, so that the water content becomes low, the coating film further shrinks, and the thermal motion of the molecular chain of the component (A) is frozen. It is considered that this generates strong internal stress, which causes the coating film to develop a peel force exceeding adhesive strength to the surface of interest, so that the coating film is likely to be spontaneously peeled off from the end thereof.

In connection with the embodiments described above, preferred aspects of the present invention are further disclosed below.

<1> A method of removing pollutants attached on a surface of interest, the method comprising the steps of: forming a coating film by applying a self-peeling film forming composition to a surface of interest on which pollutants are attached, the self-peeling film forming composition containing the following components (A) to (C), wherein a mass ratio of the component (B) to a total of the component (A) and the component (B), (B)/[(A)+(B)], is 0.6 or more and 0.95 or less; drying the coating film; and removing the pollutants together with the coating film by self-peeling of the coating film due to the drying:
   (A) a polymer containing vinyl alcohol as a constituent unit;
   (B) polystyrene sulfonic acid or a salt thereof having a sulfonation ratio of 89% or more; and
   (C) a volatile solvent.
<2> Use of a self-peeling film forming composition for removing pollutants on a surface of interest by self-peeling due to drying of a coating film, the self-peeling film forming composition comprising the following components (A) to (C), wherein a mass ratio of the component (B) to a total of the component (A) and the component (B), (B)/[(A)+(B)], is 0.6 or more and 0.95 or less:
   (A) a polymer containing vinyl alcohol as a constituent unit;
   (B) polystyrene sulfonic acid or a salt thereof having a sulfonation ratio of 89% or more; and
   (C) a volatile solvent.
<3> The method of removing pollutants or the use according to <1> or <2>, wherein the application of the self-peeling film forming composition to the surface of interest is preferably performed using a ground rake, a rake, a brush, a roller or a spray.
<4> The method of removing pollutants or the use according to any one of <1> to <3>, wherein an amount of application of the self-peeling film forming composition to the surface of interest is preferably 0.1 kg/m² or more, more preferably 0.5 kg/m² or more, further more preferably 1 kg/m² or more, and preferably 10 kg/m² or less, more preferably 8 kg/m² or less, further more preferably 5 kg/m² or less, even more preferably 3 kg/m² or less.
<5> The method of removing pollutants or the use according to any one of <1> to <4>, wherein preferably, after the step of forming a coating film by applying a self-peelable film forming composition to a surface of interest, the step of drying the coating film is carried out without other steps therebetween.
<6> The method of removing pollutants or the use according to any one of <1> to <5>, wherein the drying step is carried out in an environment preferably at -10°C or higher, more preferably at 0°C or higher, further more preferably at 5°C or higher, and preferably at 60°C or lower, more preferably at 55°C or lower, further more preferably at 50°C or lower.
<7> The method of removing pollutants or the use according to any one of <1> to <6>, wherein the coating film of the self-peeling film forming composition preferably peels at a peripheral edge portion thereof due to the drying.
<8> The method of removing pollutants or the use according to any one of <1> to <7>, wherein the component (A) is polyvinyl alcohol, anion-modified polyvinyl alcohol, cation-modified polyvinyl alcohol, a vinyl acetate-ethylene copolymer, or a hydrolysate of a vinyl acetate-ethylene copolymer.
<9> The method of removing pollutants or the use according to any one of <1> to <8>, wherein a glass transition point of the component (A) is 0°C or higher and lower than 120°C, with the glass transition point being preferably 0°C or higher, more preferably 10°C or higher, further more preferably 20°C or higher, further more preferably 30°C or higher, and preferably 120°C or lower, more preferably 110°C or lower, further more preferably 100°C or lower, further more preferably 90°C or lower.
<10> The method of removing pollutants or the use according to any one of <1> to <9>, wherein a weight average molecular weight of the component (A) is preferably 5 000 or more, more preferably 10 000 or more, further more preferably 20 000 or more, further more preferably 40 000 or more, and preferably 10 000 000 or less, more preferably 1 000 000 or less, further more preferably 500 000 or less, further more preferably 200 000 or less.
<11> The method of removing pollutants or the use according to any one of <1> to <10>, wherein a content of the component (A) in the self-peeling film forming composition is preferably 0.1 mass% or more, more preferably 0.5 mass% or more, further more preferably 1 mass% or more, even more preferably 1.5 mass% or more, and preferably 20 mass% or less, more preferably 15 mass% or less, further more preferably 10 mass% or less, even more preferably 7 mass% or less, even more preferably 5 mass% or less.
<12> The method of removing pollutants or the use according to any one of <1> to <10>, wherein the content of the component (A) in the self-peeling film forming composition is preferably from 1.5 to 20 mass%, more preferably from 1.5 to 15 mass%, further more preferably from 1.5 to 10 mass%, further more preferably from 1.5 to 7 mass%, even more preferably from 1.5 to 7 mass%.
<13> The method of removing pollutants or the use according to any one of <1> to <12>, wherein a sulfonation ratio of the component (B) is preferably 95% or more, more preferably 98% or more, further more preferably 99% or more.
<14> The method of removing pollutants or the use according to any one of <1> to <13>, wherein a glass transition point of the component (B) is preferably 210°C or higher, more preferably 300°C or higher, further more preferably 400°C or higher, further more preferably 440°C.
<15> The method of removing pollutants or the use according to any one of <1> to <14>, wherein a weight average molecular weight of the component (B) is preferably 5 000 or more, more preferably 10 000 or more, further more preferably 50 000 or more, further more preferably 100 000 or more, and preferably 10 000 000 or less, more preferably 5 000 000 or less, further more preferably 2 000 000 or less.
<16> The method of removing pollutants or the use according to any one of <1> to <15>, wherein a content of the component (B) in the self-peeling film forming composition is preferably 5 mass% or more, more preferably 7 mass% or more, further more preferably 8 mass% or more, even more preferably 10 mass% or more, and preferably 50 mass% or less, more preferably 40 mass% or less, further more preferably 30 mass% or less, even more preferably 25 mass% or less.
<17> The method of removing pollutants or the use according to any one of <1> to <15>, wherein the content of the component (B) in the self-peeling film forming composition is preferably from 5 to 50 mass%, more preferably from 7 to 40 mass%, further more preferably from 8 to 30 mass%, even more preferably from 8 to 20 mass%, even more preferably from 10 to 25 mass%.
<18> The method of removing pollutants or the use according to any one of <1> to <17>, wherein the mass ratio of the component (B) to the total of the component (A) and the component (B), (B)/[(A)+(B)], is preferably 0.65 or more, more preferably 0.70 or more, further more preferably 0.75 or more, even more preferably 0.80 or more, and preferably 0.94 or less, more preferably 0.93 or less.
<19> The method of removing pollutants or the use according to any one of <1> to <17>, wherein the mass ratio of the component (B) to the total of the component (A) and the component (B), (B)/[(A)+(B)], is preferably from 0.70 to 0.94, more preferably from 0.75 to 0.94, further more preferably from 0.75 to 0.93, even more preferably from 0.80 to 0.93.
<20> The method of removing pollutants or the use according to any one of <1> to <19>, wherein the component (C) is preferably selected from the group consisting of water and a volatile organic solvent, more preferably contains water, further more preferably contains water as a main component.
<21> The method of removing pollutants or the use according to any one of <1> to <20>, wherein a vapor pressure of the component (C) at 20°C is preferably 0.01 kPa or more and 106.66 kPa or less, more preferably 0.13 kPa or more and 66.66 kPa or less, further more preferably 0.67 kPa or more and 40.00 kPa or less, further more preferably 1.33 kPa or more and 40.00 kPa or less.
<22> The method of removing pollutants or the use according to any one of <1> to <21>, wherein a content of the component (C) in the self-peeling film forming composition is preferably 50 mass% or more, more preferably 60 mass% or more, further more preferably 70 mass% or more, and preferably 95 mass% or less, more preferably 90 mass% or less, further more preferably 85 mass% or less.
<23> The method of removing pollutants or the use according to any one of <1> to <22>, wherein potassium iodide is further contained as a component (D).
<24> The method of removing pollutants or the use according to <23>, wherein a content of the component (D) in the self-peeling film forming composition is preferably 1 mass% or more, more preferably 2 mass% or more, further more preferably 3 mass% or more, and preferably 15 mass% or less, more preferably 12 mass% or less, further more preferably 10 mass% or less.
<25> A self-peeling film forming composition comprising the following components (A) to (C), wherein a mass ratio of the component (B) to a total of the component (A) and the component (B), (B)/[(A)+(B)], is 0.6 or more and 0.95 or less:
   (A) a polymer containing vinyl alcohol as a constituent unit;
   (B) polystyrene sulfonic acid or a salt thereof having a sulfonation ratio of 89% or more; and
   (C) a volatile solvent.
<26> A self-peeling film forming composition comprising the following components (A) to (C), wherein a peel level measured by the following evaluation method is 20% or more and 100% or less:
   (A) a polymer containing vinyl alcohol as a constituent unit;
   (B) polystyrene sulfonic acid or a salt thereof having a sulfonation ratio of 89% or more; and
   (C) a volatile solvent.

<Evaluation method> the composition is applied to an epoxy resin-coated substrate plate at 0.3 g/cm², and dried for 24 hours; and an area of adhesion between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

<27> The self-peeling film forming composition according to <25> or <26>, wherein the component (A) is polyvinyl alcohol, anion-modified polyvinyl alcohol, cation-modified polyvinyl alcohol, a vinyl acetate-ethylene copolymer, or a hydrolysate of a vinyl acetate-ethylene copolymer.

<28> The self-peeling film forming composition according to any one of <25> to <27>, wherein a glass transition point of the component (A) is 0°C or higher and lower than 120°C, with the glass transition point being preferably 0°C or higher, more preferably 10°C or higher, further more preferably 20°C or higher, further more preferably 30°C or higher, and preferably 120°C or lower, more preferably 110°C or lower, further more preferably 100°C or lower, further more preferably 90°C or lower.

<29> The self-peeling film forming composition according to any one of <25> to <28>, wherein a weight average molecular weight of the component (A) is preferably 5 000 or more, more preferably 10 000 or more, further more preferably 20 000 or more, further more preferably 40 000 or more, and preferably 10 000 000 or less, more preferably 1 000 000 or less, further more preferably 500 000 or less, further more preferably 200 000 or less.

<30> The self-peeling film forming composition according to any one of <25> to <29>, wherein a content of the component (A) in the self-peeling film forming composition is preferably 0.1 mass% or more, more preferably 0.5 mass% or more, further more preferably 1 mass% or more, even more preferably 1.5 mass% or more, and preferably 20 mass% or less, more preferably 15 mass% or less, further more preferably 10 mass% or less, even more preferably 7 mass% or less, even more preferably 5 mass% or less.

<31> The self-peeling film forming composition according to any one of <25> to <29>, wherein the content of the component (A) in the self-peeling film forming composition is preferably from 1.5 to 20 mass%, more preferably from 1.5 to 15 mass%, further more preferably from 1.5 to 10 mass%, further more preferably from 1.5 to 7 mass%, even more preferably from 1.5 to 7 mass%.

<32> The self-peeling film forming composition according to any one of <25> to <31>, wherein a sulfonation ratio of the component (B) is preferably 95% or more, more preferably 98% or more, further more preferably 99% or more.

<33> The self-peeling film forming composition according to any one of <25> to <32>, wherein a glass transition point of the component (B) is preferably 210°C or higher, more preferably 300°C or higher, further more preferably 400°C or higher, further more preferably 440°C or higher.

<34> The self-peeling film forming composition according to any one of <25> to <33>, wherein a weight average molecular weight of the component (B) is preferably 5 000 or more, more preferably 10 000 or more, further more preferably 50 000 or more, further more preferably 100 000 or more, and preferably 10 000 000 or less, more preferably 5 000 000 or less, further more preferably 2 000 000 or less.

<35> The self-peeling film forming composition according to any one of <25> to <34>, wherein a content of the component (B) in the self-peeling film forming composition is preferably 5 mass% or more, more preferably 7 mass% or more, further more preferably 8 mass% or more, even more preferably 10 mass% or more, and preferably 50 mass% or less, more preferably 40 mass% or less, further more preferably 30 mass% or less, even more preferably 25 mass% or less.

<36> The self-peeling film forming composition according to any one of <25> to <35>, wherein the content of the component (B) in the self-peeling film forming composition is preferably from 5 to 50 mass%, more preferably from 7 to 40 mass%, further more preferably from 8 to 30 mass%, even more preferably from 8 to 20 mass%, even more preferably from 10 to 25 mass%.

<37> The self-peeling film forming composition according to any one of <25> to <36>, wherein the mass ratio of the component (B) to the total of the component (A) and the component (B), (B)/[(A)+(B)], is preferably 0.65 or more, more preferably 0.70 or more, further more preferably 0.75 or more, even more preferably 0.80 or more, and preferably 0.94 or less, more preferably 0.93 or less.

<38> The self-peeling film forming composition according to any one of <25> to <36>, wherein the mass ratio of the component (B) to the total of the component (A) and the component (B), (B)/[(A)+(B)], is preferably from 0.70 to 0.94, more preferably from 0.75 to 0.94, further more preferably from 0.75 to 0.93, even more preferably from 0.80 to 0.93.

<39> The self-peeling film forming composition according to any one of <25> to <38>, wherein the component (C) is preferably selected from the group consisting of water and a volatile organic solvent, more preferably contains water, and further more preferably contains water as a main component.

<40> The self-peeling film forming composition according to any one of <25> to <39>, wherein a vapor pressure of the component (C) at 20°C is preferably 0.01 kPa or more and 106.66 kPa or less, more preferably 0.13 kPa or more and 66.66 kPa or less, further more preferably 0.67 kPa or more and 40.00 kPa or less, further more preferably 1.33 kPa or more and 40.00 kPa or less.

<41> The self-peeling film forming composition according to any one of <25> to <40>, wherein a content of the component (C) in the self-peeling film forming composition is preferably 50 mass% or more, more preferably 60 mass% or more, further more preferably 70 mass% or more, and preferably 95 mass% or less, more preferably 90 mass% or less, further more preferably 85 mass% or less.

<42> The self-peeling film forming composition according to any one of <25> to <41>, wherein potassium iodide is further contained as a component (D).

<43> The self-peeling film forming composition according to <42>, wherein a content of the component (D) in the self-peeling film forming composition is preferably 1 mass% or more, more preferably 2 mass% or more, further more preferably 3 mass% or more, and preferably 15 mass% or less, more preferably 12 mass% or less, further more preferably 10 mass% or less.

<44> The self-peeling film forming composition according to any one of <25> to <43>, further comprising a surfactant, a thickener, a plasticizer or a preservative.

### Examples

### Examples 1 to 6 and Comparative Examples 1 to 3

Compositions shown in Table 1 were prepared, and the peel level (%) and the film strength were evaluated in accordance with the methods shown below.

### (Peel level evaluation method)

Each composition was applied to a 10 cm² area of a cement solidified product substrate plate at 0.3 g/cm², and dried at 25°C and 40%RH for 24 hours to prepare a sample.

An area of adhesion between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

### (Film strength evaluation method)

The composition was dried to a dry thickness of 500 µm on a glass plate or a Teflon (registered trademark) sheet in an environment at a temperature of 25°C and a humidity of 50%RH to obtain a dry film. With respect to an operation in which the obtained film was folded by 180 °, and then unfolded, "a" was assigned when the film was not broken, "c" was assigned when the film was broken, and "b" was assigned when the film had folding stripes or cracks, but was not broken.

### <Glass transition point>

The glass transition point as the components (A) and (B) described in each of Examples was determined by performing DSC measurement under the following conditions for a dry solid obtained by drying each sample at room temperature for 24 hours, and then drying the sample under reduced pressure at 80°C.

### Measuring apparatus: DSC7000X (Hitachi High-Tech Corporation)

Temperature profile:
1. The sample is heated from 20°C to a target temperature at 10°C/min, and held for 5 minutes.
2. The sample is cooled from the target temperature to 20°C at 10°C/min, and held for 5 minutes.
3. The sample is heated from 20°C to a target temperature at 10°C/min, and held for 5 minutes.
4. The sample is cooled from the target temperature to 20°C at 10°C/min, and held for 5 minutes.

The measurement was performed with the target temperature set to 250°C for Kuraray Povals 22-98 and 5-98 and Exceval RS-2117, 440°C for PS-100 and PS-50, and 100°C for HA-LATEX.

**[Table 1]**

| Component (active content, mass%) | | Comparative Example | | | Example | | | | | |
|---|---|---|---|---|---|---|---|---|---|---|
| | | 1 | 2 | 3 | 1 | 2 | 3 | 4 | 5 | 6 |
| (A) | Polyvinyl alcohol^{*1} | - | 2 | 8 | 1 | 2 | 6 | - | - | 2 |
| | Polyvinyl alcohol^{*2} | - | - | - | - | - | - | 2 | - | - |
| | Hydrolysate of vinyl acetate-ethylene copolymer^{*3} | - | - | - | - | - | - | - | 2 | - |
| (B) | Sodium polystyrene sulfonate^{*4} | 20 | - | 4 | 19 | 18 | 9 | 18 | 18 | - |
| | Sodium polystyrene sulfonate^{*5} | - | - | - | - | - | - | - | - | 18 |
| (B)' | Natural rubber latex^{*6} | - | 18 | - | - | - | - | - | - | - |
| (C) | Water | 80 | 80 | 88 | 80 | 80 | 85 | 80 | 80 | 80 |
| Mass ratio (B)/[(A)+(B)] or (B)'/[(A)+(B)']) | | 1.00 | 0.90 | 0.33 | 0.95 | 0.90 | 0.60 | 0.90 | 0.90 | 0.90 |
| Peel level (%) | | 90 | 0 | 10 | 93 | 100 | 85 | 95 | 98 | 95 |
| Film strength | | c | a | a | b | a | a | a | a | a |

| | | | | | | | | | | |
|---|---|---|---|---|---|---|---|---|---|---|
| *1: Kuraray Poval 22-88 (manufactured by KURARAY CO., LTD.), solid content: 100%, Tg: 60°C, molecular weight: 75,000, saponification degree: 88% *2: Kuraray Poval 5-88 (manufactured by KURARAY CO., LTD.), solid content: 100%, Tg: 60°C, molecular weight: 22,000, saponification degree: 88% *3: Exceval RS-2117 (manufactured by KURARAY CO., LTD.), solid content: 100%, Tg: 63°C, molecular weight: 75,000, saponification degree: 98% *4: PS-100 (manufactured by Tosoh Finechem Corporation), solid content: 22%, sulfonation ratio: 100%, Tg > 440°C, molecular weight: 1,000,000 *5: PS-50 (manufactured by Tosoh Finechem Corporation), solid content: 22%, sulfonation ratio: 100%, Tg > 440°C, molecular weight: 500,000 *6: HA-LATEX (manufactured by REGITEX Co., Ltd.), solid content: 61%, Tg: -60°C, molecular weight: 1,800,000 | | | | | | | | | | |

### Test Examples 1 to 3

For the composition of Example 2, and a composition obtained by adding 2 mass% or 5 mass% of potassium iodide to the composition of Example 2 and removing an equal amount of water therefrom, a hue change was evaluated according to the following method.

### (Hue change evaluation method)

As an alternative to a radiation irradiation test, a UV-C irradiation test was conducted by the following method.

Each composition was applied to a 10 cm² area of a polyester substrate at 0.1 g/cm², and dried under irradiation from a fluorescent lamp and UV-C irradiation at 25°C and 40% RH for 24 hours, and a change in hue was visually observed. The irradiation from a fluorescent lamp was performed in a normal laboratory environment. As the UV-C lamp, Compact Germicidal Lamp GPL27 manufactured by Sankyo Denki Co., Ltd. was used. The test was conducted by setting the distance from the light source to 15 cm.

The results showed that for the composition of Example 2, there was no change in hue either under irradiation from a fluorescent lamp or under UV-C irradiation. On the other hand, both of the composition obtained by adding 2 mass% or 5 mass% of potassium iodide to the composition of Example 2 did not undergo a hue change under irradiation from a fluorescent lamp, but turned brown under UV-C irradiation. Note that addition of potassium iodide did not change the peel level and the film strength.

## Claims

1. A method of removing pollutants attached on a surface of interest, the method comprising the steps of:
- forming a coating film by applying a self-peeling film forming composition to a surface of interest on which pollutants are attached, the self-peeling film forming composition containing the following components (A) to (C), wherein a mass ratio of the component (B) to a total of the component (A) and the component (B), (B)/[(A)+(B)], is 0.6 or more and 0.95 or less;
- drying the coating film; and
- removing the pollutants together with the coating film by self-peeling of the coating film due to the drying:
(A) a polymer containing vinyl alcohol as a constituent unit;
(B) polystyrene sulfonic acid or a salt thereof having a sulfonation ratio of 89% or more; and
(C) a volatile solvent.

2. The method of removing pollutants according to claim 1, wherein the step of removing pollutants together with the coating film comprises the step of collecting peeled dry coating film.

3. The method of removing pollutants according to claim 1 or 2, wherein the coating film of the self-peeling film forming composition is peeled from a peripheral portion due to drying.

4. The method of removing pollutants according to any one of claims 1 to 3, wherein an amount of application of the self-peeling film forming composition to the surface of interest is 0.1 kg/m² or more.

5. The method of removing pollutants according to any one of claims 1 to 4, wherein the drying step is carried out in an environment at -10°C or higher and 60°C or lower.

6. The method of removing pollutants according to any one of claims 1 to 5, wherein a glass transition point of the component (A) is 0°C or higher and 120°C or lower.

7. The method of removing pollutants according to any one of claims 1 to 6, wherein the component (A) which is a polymer containing vinyl alcohol as a constituent unit is polyvinyl alcohol, anion-modified polyvinyl alcohol, cation-modified polyvinyl alcohol, a vinyl acetate-ethylene copolymer, or a hydrolysate thereof.

8. The method of removing pollutants according to any one of claims 1 to 7, wherein the component (B) is polystyrene sulfonic acid or a salt thereof having a weight average molecular weight of 5 000 or more and 10 000 000 or less.

9. The method of removing pollutants according to any one of claims 1 to 7, wherein the component (C) contains water.

10. Use of a self-peeling film forming composition for removing pollutants on a surface of interest by self-peeling due to drying of a coating film, the self-peeling film forming composition comprising the following components (A) to (C), wherein a mass ratio of the component (B) to a total of the component (A) and the component (B), (B)/[(A)+(B)], is 0.6 or more and 0.95 or less:
(A) a polymer containing vinyl alcohol as a constituent unit;
(B) polystyrene sulfonic acid or a salt thereof having a sulfonation ratio of 89% or more; and
(C) a volatile solvent.

11. A self-peeling film forming composition comprising the following components (A) to (C), wherein a mass ratio of the component (B) to a total of the component (A) and the component (B), (B)/[(A)+(B)], is 0.6 or more and 0.95 or less:
(A) a polymer containing vinyl alcohol as a constituent unit;
(B) polystyrene sulfonic acid or a salt thereof having a sulfonation ratio of 89% or more; and
(C) a volatile solvent.

12. The self-peeling film forming composition according to claim 11, wherein a glass transition point of the component (A) is 0°C or higher and 120°C or lower.

13. The self-peeling film forming composition according to claim 11 or 12, wherein the component (B) is polystyrene sulfonic acid or a salt thereof having a weight average molecular weight of 5 000 or more and 10 000 000 or less.

14. The self-peeling film forming composition according to any one of claims 11 to 13, wherein a glass transition point of the component (B) is 210°C or higher.

15. The self-peeling film forming composition according to any one of claims 11 to 14, further comprising potassium iodide as a component (D).
